(19) Europäisches Patentamt
European Patent Office
Office européen des brevets

(11) EP 2 733 818 A2

(12) EUROPÄISCHE PATENTANMELDUNG

(43) Veröffentlichungstag:
21.05.2014  Patentblatt 2014/21

(51) Int Cl.:
*H02J 7/00* (2006.01)

(21) Anmeldenummer: 13192980.4

(22) Anmeldetag: 14.11.2013

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **14.11.2012  DE 102012220760**

(71) Anmelder: **BAG engineering GmbH**
**59759 Arnsberg (DE)**

(72) Erfinder:
• **Schreyer, Günter**
  **59581 Warstein (DE)**
• **Kremer, Thomas**
  **57392 Schmallenberg (DE)**

(74) Vertreter: **Lippert, Stachow & Partner**
**Patentanwälte**
**Postfach 30 02 08**
**51412 Bergisch Gladbach (DE)**

(54) **Multifunktionales Betriebsgerät zum Versorgen eines Verbrauchers wie eines LED-Moduls sowie Verfahren zu dessen Betrieb**

(57) Die Erfindung betrifft ein Verfahren zum Versorgen zumindest eines Verbrauchers wie eines LED-Moduls und eines Energiespeichers, bei dem ein durch einen Eingangskreis versorgter Zwischenkreis zumindest zwei Ausgangsstufen versorgt, wobei der Verbraucher an eine erste Ausgangsstufe und der Energiespeicher an eine zweite Ausgangsstufe angeschlossen wird. Das erfindungsgemäße Verfahren zeichnet sich dadurch aus, dass die zweite Ausgangsstufe in unterschiedliche Betriebszustände gebracht wird, wobei in einem Betriebszustand der zweiten Ausgangsstufe der Energiespeicher aus dem Zwischenkreis geladen und in einem anderen Betriebszustand der zweiten Ausgangsstufe der Zwischenkreis aus dem Energiespeicher versorgt wird. Die Erfindung betrifft ferner ein Betriebsgerät, das mit einem derartigen Verfahren arbeitet.

Fig. 1

EP 2 733 818 A2

## Beschreibung

Die Erfindung betrifft ein Verfahren zum Versorgen zumindest eines Verbrauchers, wie eines LED-Moduls und eines Energiespeichers, bei dem ein durch einen Eingangskreis versorgter Zwischenkreis zumindest zwei Ausgangsstufen versorgt, wobei der Verbraucher an eine erste Ausgangsstufe und der Energiespeicher an eine zweite Ausgangsstufe angeschlossen wird. Darüber hinaus betrifft die Erfindung auch ein Betriebsgerät zur Umsetzung eines solchen Verfahrens.

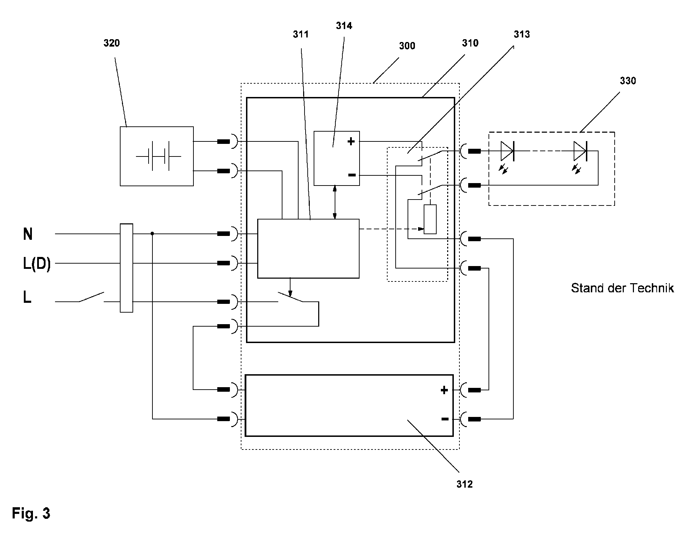

Ein derartiges Verfahren nach dem Stand der Technik wird insbesondere beim Betrieb von Notlichtbetriebsgeräten für Leuchtmittel angewandt, welche in Normalbetrieb das jeweilige Leuchtmittel über ein externes Versorgungsnetz betreiben und gleichzeitig den Energiespeicher laden. Fällt das externe Versorgungsnetz aus, wird ein Notlichtbetrieb dadurch bereitgestellt, dass das Leuchtmittel aus dem besagten Energiespeicher weiterbetrieben wird. Eine herkömmliche, als Notlichtsystem 300 ausgebildete Vorrichtung zum Bereitstellen einer sogenannten Dauerschaltung ist in Figur 3 schematisch dargestellt. Das System umfasst zum einen den Notlichtkonverter 310, welcher an ein äußeres Versorgungsnetz L(D), L, N angeschlossen ist, wobei die Leitung L(D) eine Leitung angibt, an welcher permanent die Phase des Versorgungsnetzes und L die Leitung angibt, über welche mittels eines Schalters die Netzphase an den Notlichtkonverter 310 angelegt werden kann. Der Notlichtkonverter 310 umfasst eine Steuereinrichtung 311 mit Ladestufe, über welche ein externer Energiespeicher 320 beim Vorliegen einer Phase L(D) des Versorgungsnetzes geladen wird. Ein herkömmliches LED-Betriebsgerät 312 versorgt den angeschlossenen Verbraucher, hier ein LED-Leuchtmittel 330. In einer Betriebssituation, bei welcher das Versorgungsnetz ausfällt, erkennt dies die Steuereinrichtung mit Ladestufe 311 und steuert die Notlichttreiberstufe 314 zum Treiben der LED-Leuchtmittel 330 an. Hierzu steuert die Steuereinrichtung 311 das Relais 313 an, um das LED-Leuchtmittel mit der Notlichttreiberstufe 314 zu verbinden.

Der Erfindung liegt die Aufgabe zugrunde, das beschriebene herkömmliche Verfahren bzw. ein zugeordnetes System zu verbessern, insbesondere kostengünstiger zu gestalten.

Diese Aufgabe löst die vorliegende Erfindung vorrichtungsseitig auf überraschende Weise schon mit einem Verfahren mit den Merkmalen von Anspruch 1. Das erfindungsgemäße Verfahren zeichnet sich dadurch aus, dass die zweite Ausgangsstufe eines Leuchtmittel-Betriebsgerätes in unterschiedliche Betriebszustände gebracht werden kann, wobei in einem ersten Betriebszustand der zweiten Ausgangsstufe der Energiespeicher aus dem Zwischenkreis geladen und in einem anderen, d.h. zweiten Betriebszustand der zweiten Ausgangsstufe der Zwischenkreis aus dem Energiespeicher versorgt wird. Diese "zweite Ausgangsstufe" kann dabei eine beliebige der vom Zwischenkreis versorgten Ausgangsstufen sein. Die Anzahl der Ausgangsstufen des Betriebsgerätes kann grundsätzlich beliebig und an das spezifische Versorgungsproblem angepasst sein. Durch die geschickte Nutzung vorhandener Leuchtmittel-Treiber-Hardware in unterschiedlichen Betriebsmodi ist somit für ein so aufgebautes, gleichwirkendes Notlicht-System kein separater Notlichtkonverter mehr notwendig.

Mit dem erfindungsgemäßen Verfahren kann das Vorsehen einer weiteren, speziellen Ausgangsstufe, über welche der Energiespeicher den Verbraucher speist, eingespart werden, da die zweite Ausgangsstufe durch das Einstellen unterschiedlicher Betriebszustände auch eingerichtet ist, den Zwischenkreis zu speisen, sodass der Verbraucher weiter über die erste bzw. diesem zugeordnete Ausgangsstufe betrieben werden kann, welche selbst durch den Zwischenkreis gespeist wird.

Weitere erfindungsgemäße Merkmale sind in den Unteransprüchen sowie der allgemeinen Beschreibung und der Figurenbeschreibung angegeben.

Zweckmäßigerweise kann bei dem erfindungsgemäßen Verfahren vorgesehen sein, dass der eine Betriebszustand der zweiten Ausgangsstufe durch Einstellen einer ersten Schaltstellung eines Schaltmittels der zweiten Ausgangsstufe eingestellt und der andere Betriebszustand der zweiten Ausgangsstufe durch Einstellen einer zweiten Schaltstellung des Schaltmittels der zweiten Ausgangsstufe eingestellt wird. Damit können die unterschiedlichen Betriebsarten der zweiten Ausgangsstufe und damit eines zugeordneten Betriebsgerätes durch Steuerung eines einzelnen Schaltmittels bereitgestellt werden.

Zweckmäßigerweise wird durch die zweite Ausgangsstufe in dessen einen Betriebszustand die Funktion eines Tiefsetzstellers und in dessen anderen Betriebszustand die Funktion eines Hochsetzstellers ausgeführt. Durch diese Maßnahme kann eine Anpassung der eventuell unterschiedlichen Spannungen im Zwischenkreis und der Spannung des Energiespeichers, beispielsweise eines Akkus, durchgeführt werden.

Zweckmäßigerweise umfasst der Zwischenkreis eine Kondensatoreinrichtung, welche im zweiten Betriebszustand als Ausgangskapazität für den durch die zweite Ausgangsstufe gebildeten Hochsetzsteller dient. Durch diese Maßnahme kann ein ansonsten notwendiges zusätzliches Bauteil eingespart werden, da die besagte Kondensatoreinrichtung sowohl zum Puffern der Zwischenkreisspannung als auch als Kapazität eines Hochsetzstellers nutzbar ist.

Eine besonders einfache Verschaltung ergibt sich bei einem Verfahren, bei welchem das Schaltmittel der zweiten Ausgangsstufe zumindest einen Umschalter umfasst, wobei in einer Schaltstellung des Schaltmittels ein Kontakt des zumindest einen Umschalters mit dem Bezugspotential des Zwischenkreises verbunden wird.

Zweckmäßigerweise kann die zweite Ausgangsstufe von einer in einem Betriebsgerät angeordneten Steuereinrichtung gesteuert werden, wobei vorzugsweise das Schaltmittel der zweiten Ausgangsstufe über die Eingangsspannung des Eingangskreises selbstgesteuert sein kann. Durch diese Maßnahme wird erreicht, dass im Schaltmittel der zweiten Ausgangsstufe, das insbesondere extern zum Gehäuse des Betriebsgerätes angeordnet sein kann, in welchem der Eingangskreis, der Zwischenkreis sowie Ausgangsstufen angeordnet sind, keine besonderen Steuerleitungen zwischen dem Betriebsgerät sowie diesem Schaltmittel vorgesehen sein müssen. Stattdessen wird bei dieser Ausführungsform das besagte Schaltmittel zum Einstellen des ersten oder zweiten Betriebszustandes der zweiten Ausgangsstufe durch das externe Versorgungsnetz gesteuert. Beispielsweise kann vorgesehen sein, dass in Abhängigkeit des Vorliegens oder Nichtvorliegens einer äußeren Versorgungsspannung das Schaltmittel zwischen zwei Betriebszuständen wechselt. Besonders zweckmäßig kann es dabei auch sein, wenn in dem Betriebsgerät, in welchem der Eingangskreis sowie die Ausgangsstufen angeordnet sind, eine Änderung des Betriebszustandes des Schaltmittels erkannt wird, beispielsweise durch das Messen der Spannung am Ausgang einer Ausgangsstufe, und abhängig vom Erkennen einer Änderung des Betriebszustandes des Schaltmittels vorgegebene Verfahrensschritte eingeleitet werden, beispielsweise ein Betrieb einer angeschlossenen LED-Schaltung eingeleitet wird, wobei der Energiespeicher den Zwischenkreis speist und die LED-Schaltung mit evtl. durch Dimmen veränderter Leistung betrieben wird.

In weiteren Ausführungsformen kann zweckmäßigerweise jedoch auch vorgesehen sein, dass das Schaltmittel von einer Steuereinrichtung gesteuert wird, von welcher über einen Datenbus Steuerinformation an das Schaltmittel übermittelt wird. Ein derartiges Betriebsverfahren kann beispielsweise dann zweckmäßig sein, wenn das Betriebsgerät mit einer zentralen Steuerung verbunden ist, sodass ersteres die Betriebssituation an die zentrale Steuerung melden kann und diese dann bei Bedarf das Schaltmittel der zweiten Ausgangsstufe steuert. Andererseits kann auch vorgesehen sein, dass die Steuereinrichtung des Betriebsgerätes das Schaltmittel zum Schalten ansteuert.

Das erfindungsgemäße Verfahren kann dadurch weitergebildet werden, indem die am Verbraucher anliegende Spannung und/oder die Spannung des Energiespeichers erfasst wird, um in Abhängigkeit des Ergebnisses der Messungen den Betrieb des Verbrauchers zu steuern. Zur Vermeidung des damit verbundenen Aufwandes kann es zweckmäßig sein, dass in einer Spannungserfassungsschaltung ein einzelner Transistor angeordnet wird, der über einen Widerstand mit einem ersten Ausgangsanschluss der Ausgangsstufe und dessen Steuereingang mit einem zweiten Ausgangsanschluss der Ausgangsstufe des Verbrauchers bzw. Energiespeichers verbunden wird.

Zweckmäßigerweise wird die Spannung am Verbraucher bzw. am Energiespeicher Masse bezogen erfasst, beispielsweise dadurch, dass ein weiterer Anschluss des Transistors über einen Messwiderstand mit einem Bezugspotential verbunden wird, wobei an dem Messwiderstand eine Messspannung abgegriffen wird und die Steuereinrichtung aus der abgegriffenen Messspannung die Spannung am Verbraucher bzw. des Energiespeichers ermittelt.

Um eine möglichst genaue Spannungsermittlung zum Zwecke der Verfahrenssteuerung bereitzustellen, kann erfindungsgemäß vorgesehen sein, dass in einem Speicher eine Kennlinie des Transistors hinterlegt wird, welcher eine Flussspannung in Abhängigkeit eines Transistorstromes angibt, wobei die Spannung am Verbraucher bzw. des Energiespeichers unter Berücksichtigung der abgegriffenen Messspannung und der abgelegten Kennlinie berechnet wird. Zum gleichen Zweck kann auch vorgesehen sein, die Temperatur des Transistors zu messen, wobei im Speicher eine Temperaturkennlinie des Transistors hinterlegt wird, welcher eine Flussspannung in Abhängigkeit der Temperatur des Transistors angibt, und wobei die Spannung am Verbraucher bzw. des Energiespeichers unter Berücksichtigung der abgegriffenen Messspannung und der abgelegten Kennlinie berechnet wird. Besonders zweckmäßig kann es dabei sein, wenn mehrere, die Messgenauigkeit beeinflussende Parameter, wie die Abhängigkeit der BE-Spannung des Transistors von Strom und Temperatur, Toleranzen der Mess-Bauteile etc., bei der Ermittlung der Spannung am Verbraucher bzw. des Energiespeichers berücksichtigt werden.

Vorrichtungsseitig wird die obige Aufgabe mit einem Betriebsgerät zum Versorgen eines Verbrauchers gelöst, umfassend einen Eingangskreis mit einer Konvertereinrichtung zum Anschluss an ein Eingangsnetz, insbesondere mit einer an ein Wechselstromnetz anschließbare Gleichrichtereinrichtung, mit einem Ausgang zum Versorgen eines Zwischenkreises, an welchem zumindest zwei Ausgangsstufen angeschlossen sind, wobei eine erste Ausgangsstufe den Verbraucher speist und eine zweite Ausgangsstufe zum Laden eines Energiespeichers eingerichtet ist, wobei zumindest eine der beiden Ausgangsstufen einen von einer Steuereinrichtung gesteuerten Schalter aufweist. Das erfindungsgemäße Betriebsgerät zeichnet sich dadurch aus, dass die zweite Ausgangsstufe in unterschiedliche Betriebszustände bringbar ist, wobei in einem Betriebszustand der zweiten Ausgangsstufe der Energiespeicher aus dem Zwischenkreis ladbar und in einem anderen Betriebszustand der zweiten Ausgangsstufe der Zwischenkreis aus dem Energiespeicher versorgbar ist. Insofern wird bei dem erfindungsgemäßen Betriebsgerät mit einer einzelnen Ausgangsstufe je nach Betriebszustand dieser Ausgangsstufe der Zwischenkreis versorgt oder der Energiespeicher aufgeladen.

Zweckmäßigerweise kann die zweite Ausgangsstufe durch einen Schaltkreis zumindest umfassend einen steuerbaren Schalter, eine Drossel, eine Diode, eine zum Energiespeicher parallel angeordnete Kondensatoreinrichtung sowie das Schaltmittel gebildet sein. Zweckmäßigerweise sind diese Bauteile angeordnet, um in einem ersten Betriebszustand der zweiten Ausgangsstufe die Funktion eines Tiefsetzstellers bereitzustellen und in dem anderen Betriebszustand der zweiten Ausgangsstufe die Funktion eines Hochsetzstellers.

Zweckmäßigerweise ist das erfindungsgemäße Betriebsgerät so gestaltet, dass der Eingangskreis sowie die erste und zweite Ausgangsstufe in einem Gehäuse des Betriebsgerätes angeordnet sind, wobei die zweite Ausgangsstufe das besagte Schaltmittel umfasst. In einer anderen zweckmäßigen Ausführungsform kann jedoch auch vorgesehen sein, dass dieses Schaltmittel der zweiten Ausgangsstufe außerhalb des Betriebsgerätes angeordnet ist und zusammen mit der im Betriebsgerät angeordneten zweiten Ausgangsstufe eine "erweitere Ausgangsstufe" bildet zur Umsetzung des obenstehend beschriebenen erfindungsgemäßen Verfahrens.

Zweckmäßigerweise weist das erfindungsgemäße Betriebsgerät einen Ausgangsanschluss auf, welcher auf dem Bezugspotential des Zwischenkreises liegt. Dieser kann entweder zusätzlich angebracht sein oder für andere, hier nicht beschriebene Ausführungsformen bereits vorhanden sein. Durch diese Maßnahme kann erreicht werden, dass in solchen Fällen, bei welchen die erweiterte zweite Ausgangsstufe ein extern zum Betriebsgerät angeordnetes Schaltmittel umfasst, letzteres so verschaltet werden kann, dass die zweite Ausgangsstufe in die beiden Betriebszustände durch Steuern des Schaltmittels versetzt werden kann.

Wie im Hinblick auf das erfindungsgemäße Verfahren erläutert, kann das erfindungsgemäße Betriebsgerät zweckmäßigerweise eine Spannungserfassungsschaltung zur Erfassung der Spannung am Verbraucher bzw. des Energiespeichers parallel zu diesem angeordnet aufweisen, umfassend einen einzelnen Transistor, welcher über einen Widerstand mit einem ersten Anschluss der Ausgangsstufe und dessen Steuereingang mit einem zweiten Anschluss der Ausgangsstufe des Verbrauchers verbunden ist. Darüber hinaus ist zweckmäßigerweise ein weiterer Anschluss des Transistors über einen Messwiderstand mit einem Bezugspotential verbunden, wobei an dem Messwiderstand eine Messspannung abgreifbar ist, und wobei die Steuereinrichtung aus der abgegriffenen Messspannung die Spannung am Verbraucher oder des Energiespeichers ermittelt. Insofern stellt die Spannungserfassungsschaltung eine Schaltung dar, welche die zu bestimmende Spannung schaltungstechnisch in eine leicht zu messende Spannung umwandelt, aus welcher die gesuchte Größe ermittelbar ist.

Durch diese konstruktive Maßnahme wird erreicht, dass die Spannung am Verbraucher, beispielsweise am Leuchtmittel, wie einer LED-Kette so erfasst werden kann, dass kein zusätzlicher Verbraucherstrom durch den Messzweig erzeugt wird, der ansonsten beispielsweise bei einer LED-Kette zu einem sichtbaren Glimmen führen kann. Darüber hinaus kann die vorteilhafte Spannungsmessung mit einer zu einem herkömmlicherweise verwendeten Stromspiegel verringerten Bauteileanzahl realisiert werden.

Zweckmäßigerweise kann der Transistor als kostengünstiger bipolarer Transistor, insbesondere als pnp-Transistor ausgebildet sein.

Um bei einem Betriebsgerät, bei welchem zumindest eine Ausgangsstufe eine PWM-Ansteuerung umfasst, beispielsweise um eine Dimmung eines als Verbraucher angeschlossenen Leuchtmittels bereitzustellen, eine Erfassung der Spannung am Verbraucher bzw. des Energiespeichers zu realisieren, kann zusätzlich zu der Spannungserfassungsschaltung eine Austasteinrichtung zum Austasten der Messspannung im Ansprechen auf die Schalterstellung des Schalters der Ausgangsstufe vorgesehen sein. Eine besonders kostengünstige Ausführungsform wird erreicht, wenn die Austasteinrichtung einen Transistor umfasst, dessen Steuereingang mit dem Steuereingang des Schalters des Tiefsetzstellers verbunden ist.

Das erfindungsgemäße Betriebsgerät kann zum Betreiben einer Vielzahl von Verbrauchern ausgebildet sein, um diese auch beim Wegfall eines äußeren Versorgungsnetzes zu betreiben, insbesondere als Notlichtbetriebsgerät zum Betreiben eines Leuchtmittels nach dem Erkennen des Ausfalls des Versorgungsnetzes.

Die obige Aufgabe wird ferner durch ein Betriebssystem, umfassend ein obenstehend beschriebenes Betriebsgerät sowie ein daran angeschlossenes Schaltmittel gelöst, welches derartig an das Betriebsgerät angeschlossen ist, dass eine oben beschriebene erweiterte Ausgangsstufe verschaltet ist, welche in einen ersten und einen zweiten Betriebszustand versetzbar ist.

Die Erfindung wird im Folgenden durch das Beschreiben einiger Ausführungsformen unter Bezugnahme auf die beiliegenden Zeichnungen erläutert, wobei

Figur 1     eine Ausführungsform eines erfindungsgemäß ausgebildeten Betriebsgeräts mit zwei Ausgangsstufen in einer schematischen Darstellung;

Figur 2     eine weitere Ausführungsform einer Ausgangsstufe für ein erfindungsgemäß ausgebildetes Betriebsgerät in einer schematischen Darstellung und

Figur 3     ein herkömmliches Notlicht-System mit LED-Treiber und separatem Notlichtkonverter in einer schematischen Darstellung

zeigt.

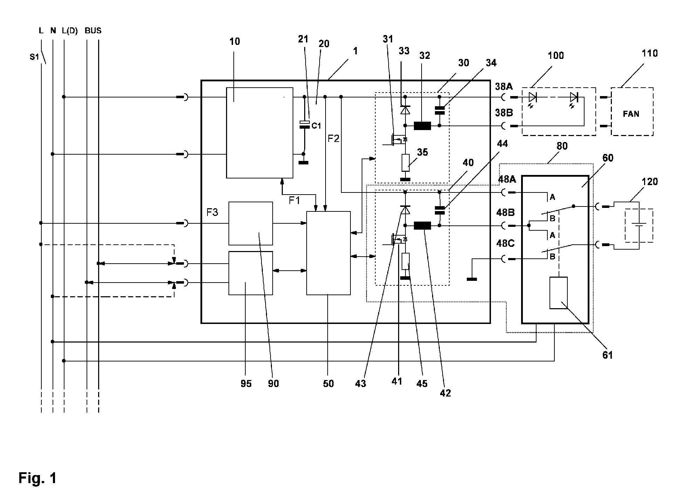

Figur 1 zeigt ein erfindungsgemäß ausgebildetes Notlichtbetriebsgerät mit einem Eingangskreis, welcher in der beschriebenen Ausführungsform eine Konvertereinrichtung 10 in Form einer Gleichrichterschaltung zum Wandeln der anliegenden Wechselspannung des externen Wechselspannungsnetzes N, L(D) in eine Gleichspannung eines Zwischenkreises 20 umfasst. Der Zwischenkreis 20 weist einen Pufferkondensator 21 auf. Je nach spezifischer Anwendung kann die Konvertereinrichtung 10 zusätzlich einen Leistungsfaktorkorrekturfilter aufweisen. In der beschriebenen Ausführungsform werden vom Zwischenkreis 20 zwei Ausgangsstufen 30, 40 gespeist, wobei die erste Ausgangsstufe einen Verbraucher wie eine LED-Reihenschaltung 100 oder einen Ventilator 110 speist. In einer nicht dargestellten Ausführungsform können weitere Ausgangsstufen vorgesehen sein, beispielsweise eine weitere, welche eine aktive Kühlstufe für die von der ersten Ausgangsstufe gespeisten LED-Reihenschaltung treibt.

In der beschriebenen Ausführungsform ist die erste Ausgangsstufe 30 als herkömmlicher Tiefsetzsteller ausgebildet, umfassend den Schalter 31, die Induktivität 32, die Diode 33 sowie den Kondensator 34. Die Höhe der Ausgangsspannung der Ausgangsstufe 30 wird durch geregeltes Ein- und Ausschalten des Schalters 31 mittels der Steuerungseinrichtung 50 des Betriebsgerätes mit programmierbarer Notlichtfunktion 1 gesteuert. Dabei fließt während der Einschaltzeit des Transistors 31 ein Laststrom durch die Induktivität 32 sowie durch den Verbraucher 100, 110; die Diode 33 sperrt während dieses Zeitabschnittes. Der Verbraucherstrom wird in dieser Phase über den Messwiderstand 35 ermittelt. Während der Ausschaltphase des Schalters 31 dient die Induktivität 32 als Energiespeicher, der Laststrom durch den Verbraucher 100, 110 fließt weiter. In diesem Zeitabschnitt wird der Kreis durch die Diode 33 geschlossen. Die Ausgangspannung der ersten Ausgangsstufe 30 liegt an den Anschlüssen 38A, 38B an.

Die zweite Ausgangsstufe 40, welche wiederum von dem Zwischenkreis 20 gespeist wird, ist identisch zu der Ausgangsstufe 30 aufgebaut, d.h. als Tiefsetzsteller mit einem Schalter 41, einer Induktivität 42, einer Diode 43 sowie einem Kondensator 44. Der Verbraucherstrom wird in der leitenden Phase des Schalters 41 über den Messwiderstand 45 ermittelt. Die Ausgangsspannung der Ausgangsstufe 40 für den Tiefsetzsteller liegt an den Ausgangsanschlüssen 48A, 48B an. Auch die an den Anschlüssen 48A, 48B anliegende Ausgangsspannung oder der Ausgangsstrom der Ausgangsstufe 40 wird durch Ansteuern des Schalters 41 über die Steuereinrichtung 50 eingestellt.

Wie aus Figur 1 ersichtlich, weist das erfindungsgemäße Betriebsgerät mit programmierbarer Notlichtfunktion 1 in Bezug auf die zweite Ausgangsstufe 40 ausgangsseitig einen dritten Anschluss 48C auf, welcher mit dem Bezugspotential des Zwischenkreises verbunden ist. Diese drei Ausgangsanschlüsse 48A, 48B und 48C sind über ein als Relais 60 ausgebildetes Schaltmittel in der dargestellten Weise mit dem Akku 120 verbunden. In der dargestellten Ausführungsform wird die Relaisspule 61 des Relais 60 über das Versorgungsnetz N, L(D) gesteuert. Solange die Netzspannung vorliegt, sind die Relaiskontakte A geschlossen, sodass der Akkumulator 120 wie obenstehend beschrieben über den Tiefsetzsteller der Ausgangsstufe 40 geladen werden kann, was über die Steuereinrichtung 50 gesteuert wird.

Beim Ausfall des Netzes N, L(D) fällt das Relais 60 in seine Ruhestellung, die Kontakte B sind geschlossen, d.h. der Akkumulator 120 wird mit den Anschlüssen 48B, 48C verbunden wie in Figur 1 angegeben. Wie der Fachmann erkennt, arbeitet nun die Ausgangsstufe 40 zusammen mit dem externen Relais 60 als Hochsetzsteller, wobei die Steuereinrichtung den Netzausfall erkennt und den Schalter 41 entsprechend ansteuert, und wobei der Kondensator 21 des Zwischenkreises als Ausgangskondensator des Hochsetzstellers wirkt. In dieser Hinsicht kann eine erweiterte Ausgangsstufe 80 des erfindungsgemäß gestalteten Betriebsgerätes mit programmierbarer Notlichtfunktion identifiziert werden, welche sich aus der wie angegeben verschalteten Ausgangsstufe 40 und dem externen Relais 60 zusammensetzt und die in der Figur mit dem Bezugszeichen 80 versehen ist.

Die Steuereinrichtung 50 kann insbesondere den Ausfall des Netzes über die Sensoranschlüsse F1 und/oder F2 erfassen. Im Ansprechen auf das Erkennen des Ausfalls des Netzes steuert die Steuereinrichtung 50 den Schalter 41 als Schalter des beschriebenen Hochsetzstellers derart an, dass eine vorgegebene Zwischenkreisspannung zum Betrieb der ersten Ausgangsstufe 30 bereitgestellt werden kann. Die Sensorleitung F2 stellt für eine diesbezügliche Regelung die Momentanspannung im Zwischenkreis 20 für die Steuereinrichtung 50 bereit.

Der Betrieb des erfindungsgemäßen Betriebsgerätes mit programmierbarer Notlichtfunktion gemäß Figur 1 zeichnet sich dadurch aus, dass die zweite Ausgangsstufe 40, 80 in zwei unterschiedliche Betriebszustände gebracht werden kann, i.d.R. abhängig vom Zustand des externen Eingangs oder Versorgungsnetzes N, L(D), wobei in einem ersten Betriebszustand der zweiten Ausgangsstufe 40, 80 der Akkumulator 120 aus dem Zwischenkreis 20 geladen und im zweiten Betriebszustand der zweiten Ausgangsstufe 40, 80 dieser Zwischenkreis 20 aus dem Akku 120 versorgt wird. Die beiden unterschiedlichen Betriebszustände werden dabei zum einen durch unterschiedliche Schaltstellungen des Relais 60 erzeugt, wobei dieses Relais in der beschriebenen Ausführungsform selbstgesteuert ist in Abhängigkeit des Zustandes des Eingangsnetzes N, L(D). Ferner steuert die Steuereinrichtung 50 den Schalter 41 der zweiten Ausgangsstufe 40, 80 in Abhängigkeit des jeweiligen Betriebszustands der zweiten Ausgangsstufe 40, 80, d.h. entweder zum Speisen des Zwischenkreises 20 oder zum Laden des Akkus 120.

In einer nicht dargestellten Ausführungsform kann auch vorgesehen sein, dass das hier als Relais 60 ausgebildete Schaltmittel von der Steuereinrichtung 50 des Betriebsgerätes oder durch eine zentrale Steuerung, beispielsweise über einen Bus gesteuert wird.

Grundsätzlich besteht erfindungsgemäß auch die Möglichkeit, dass die innerhalb eines Betriebsgerätes angeordnete Steuereinrichtung 50 den Zustand der Dauerphase L(D) überwacht und nach dem Erkennen eines Netzausfalls die als Energiespeicherladungsschaltung arbeitende zweite Ausgangsstufe 40 auf den bevorstehenden Betriebsmodus-Wechsel vorbereitet. Beispielsweise kann der Ladestrom unterbrochen, die zweite Ausgangsstufe auf die Funktion "Hochsetzsteller" umkonfiguriert und ferner die das Leuchtmittel speisende erste Ausgangstufe auf die Abgabe einer Notlichtleistung eingestellt werden, um eine unnötige Entladung des Zwischenkreises 20 zu verhindern. Im nächsten Schritt kann dann auf den Spannungswechsel an der zweiten Ausgangsstufe gewartet und nach Erkennen des Spannungswechsels der Zwischenkreis aus dem Energiespeicher gespeist werden. Andererseits ist es in einer weiteren Ausführungsform auch möglich, dass die Steuereinrichtung nach dem Erkennen eines Netzausfalls mittels einer weiteren Schnittstelle das Schaltmittel, z.B. ein Relais umschaltet. Wie aus Figur 1 ersichtlich, erfasst das Notlichtbetriebsgerät 1 in der angegebenen Ausführungsform den Zustand des Schalters S1 über den Sensoranschluss F3 und die zugeordnete Einrichtung 90, von welcher Information über die erfasste Schalterstellung an die Steuereinrichtung 50 weitergegeben wird. Darüber hinaus weist das Betriebsgerät eine Schnittstelle 95 auf, mit welcher das Gerät an externe Steuerleitungen oder einen Bus angeschlossen werden kann, beispielsweise zur Verbindung mit einer zentralen Steuereinrichtung.

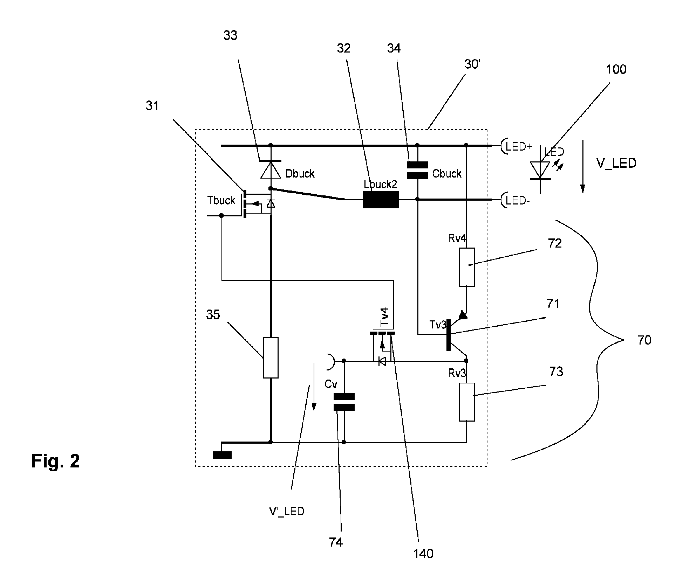

Zum Erkennen der jeweiligen Betriebssituation des Notlichtbetriebsgeräts 1 bzw. des Eingangsnetzes N, L(D) oder auch zur genauen Steuerung der Ausgangswerte wie Ausgangsspannung, oder -leistung der jeweiligen Ausgangsstufe 30, 40 kann bei dem erfindungsgemäßen Notlichtbetriebsgerät in der jeweiligen Ausgangsstufe eine Spannungserfassungsschaltung integriert sein. Dies ist in Figur 2 schematisch für die Ausgangsstufe 30 gezeigt, wobei diese erweiterte Ausgangsstufe in Figur 2 mit dem Bezugszeichen 30' gekennzeichnet ist. Aufgrund der Stromerfassung über den Messwiderstand 35 bzw. 45, siehe Fig. 1, und der Spannungserfassung über den Messwiderstand 73 kann die Steuereinrichtung 50 auch die von der jeweiligen Ausgangsstufe abgegebene Leistung ermitteln und steht zur Steuerung bzw. Regelung der jeweiligen Ausgangsstufe zur Verfügung. In der beschriebenen Ausführungsform weist die Steuereinrichtung 50 zugeordnete A/D-Wandler auf, um die Spannungen an den Messwiderständen 35, 45 und 73 zu ermitteln.

Je nach Ausführungsform kann eine solche Spannungserfassungsschaltung 70 auch in mehreren oder in allen Ausgangsstufen des erfindungsgemäßen Notlichtbetriebsgerätes vorgesehen sein, insbesondere auch in der zweiten Ausgangsstufe 40. Damit lässt sich auch in der in Figur 1 angegebenen zweiten Ausgangsstufe die aktuelle Spannung des Akkus 120 erfassen. Gleiche Bauteile in Bezug auf die Darstellung von Figur 1 sind mit dem gleichen Bezugszeichen versehen.

Fällt bei dem Betriebsgerät gemäß Fig. 1 und den mit Spannungsverfassungseinrichtungen ausgestatteten Ausgangsstufen 30, 40 das Versorgungsnetz aus, kann die Steuereinrichtung 50 das Schalten des Relais 60 durch die gemessene abnorme Spannung an den Anschlüssen 48A, 48B erkennen und beispielsweise die beschriebene zweite Betriebsart der zweiten Ausgangstufe steuern. Wird z.B. die zweite Ausgangstufe zum Laden des Speichers 120 betrieben, misst die Spannungsverfassungseinrichtung die Spannung des Speichers 120, beispielsweise 4,8 V. Schaltet dagegen das Relais 60 um, misst die Spannungsverfassungseinrichtung die Differenz aus Zwischenkreis- und Akkuspannung. Da beide Werte typischerweise stark unterschiedlich sind, die Zwischenkreisspannung beträgt beispielsweise 60 V, kann somit bei dem erfindungsgemäßen Notlichtsystem der Ausfall des Versorgungsnetzes auf einfache Weise erfasst und der Notlichtbetrieb eingeleitet und gesteuert werden.

Der Aufbau der Spannungserfassungsschaltung 70, welche je nach Ausführungsform baugleich in einer einzelnen, mehreren oder allen Ausgangsstufen vorgesehen werden kann, wird nachfolgend mit Bezug auf Fig. 2 für die erste Ausgangsstufe beschrieben, welche den Verbraucher 100 speist, siehe Fig.1. Zur massebezogenen Messung der Ausgangsspannung, welche in Fig. 2 mit V_LED bezeichnet ist, ist bei der beschriebenen Ausführungsform erfindungsgemäß eine Spannungserfassungsschaltung 70 umfassend ein einzelner pnp-Transistor 71 vorgesehen, welcher über einen Emitterwiderstand 72 mit der einen Ausgangsklemme der Ausgangsstufe 30' und dessen Basis mit der anderen Ausgangsklemme der Ausgangsstufe verbunden ist. In der beschriebenen Ausführungsform ist damit der Emitter mit dem hohen Potential des Versorgungskreises und die Basis des Transistors 71 mit dem niedrigen Ausgangspotential der Ausgangsstufe 30' und damit des Kondensators 34 verbunden. Die Spannungserfassungsschaltung 70 weist darüber hinaus einen Kollektorwiderstand 73 auf, an welchem eine Spannung abfällt, die näherungsweise linear von der Ausgangsspannung V_LED der Ausgangsstufe 30' abhängt. Diese Bezugsgröße ist von der Steuereinrichtung 50 abgreifbar, siehe Figur 1, und steht damit zur Steuerung des Notlichtbetriebsgerätes 1 zur Verfügung.

Bei hoher Stromverstärkung des Transistors 71 ist der Basisstrom näherungsweise vernachlässigbar. Die Beziehung zwischen der gemessenen Spannung V_LED und der gesuchten Ausgangsspannung der Ausgangsstufe 30' ergibt sich durch die Gleichung

$$V'\_LED = (V\_LED - V\_BE) \times (RV3 / RV4),$$

wobei V_LED die Messspannung am Kondensator 74, V_LED die gesuchte Ausgangsspannung der ersten Ausgangsstufe 30', V_BE die Emitter-Basis Spannung am Transistor 71, RV3 bzw. RV4 die Widerstandswerte der Widerstände 73 bzw. 74 angeben.

Die beschriebene Spannungserfassungsschaltung 70 ist aufgrund der verwendeten Bauteile vergleichsweise kostengünstig und weist gegenüber einer üblicherweise verwendeten getrennten Messung der Spannungen an den Anschlüssen 38A bzw. 38B zur Bezugsmasse und anschließender Differenzbildung den Vorteil auf, dass im angeschlossenen Verbraucher, hier der LED-Reihenschaltung 100, kein zusätzlicher Stromfluss durch den Messzweig erzeugt wird, was ansonsten bei der LED-Reihenschaltung 100 zu einem Glimmen führen kann. Gegenüber einem häufig verwendeten, ein solches Glimmen auch vermeidenden Stromspiegel weist die angegebene Spannungserfassungsschaltung eine verringerte Bauteileanzahl auf.

In den meisten Anwendungen, insbesondere beim Treiben einer LED-Reihenschaltung 100 mit einer Vielzahl angeschlossener LED als Verbraucher ist die Basisemitterspannung V_BE gegenüber der Ausgangsspannung der Ausgangsstufe 30' vernachlässigbar. In einer weiter verbesserten Ausführungsform kann jedoch auch vorgesehen sein, bei der Ermittlung der Spannung am Verbraucher bzw. am Ausgang der Ausgangsstufe eine Korrekturberechnung vorzunehmen. Beispielsweise kann vorgesehen sein, die Temperatur des Transistors 71 zu messen und die Flussspannung auf der Grundlage einer hinterlegten Temperaturkennlinie des Transistors zu ermitteln, sodass mit der obigen Gleichung die Spannung am Verbraucher exakter ermittelbar ist. In einer weiteren Ausführungsform kann auch vorgesehen sein, zusätzlich zu der Spannung am Kondensator 74 den Kollektorstrom zu ermitteln und mittels einer hinterlegten Kennlinie des Transistors, welche die Abhängigkeit der Flussspannung V_BE von dem Kollektorstromes angibt, die Spannung am jeweiligen Verbraucher exakt zu ermitteln. Weitere, hier nicht näher bezeichnete Abweichungen von der vereinfachten Gleichung sowie Bauteiltoleranzen können in einer solchen Kennlinie ebenfalls berücksichtigt werden.

Um die Erfassung der LED-Flussspannung der angeschlossenen LED-Reihenschaltung 100 auch im Falle einer PWM-Dimmung ohne die Notwendigkeit aufwendiger Synchronisationsschaltungen bereitzustellen, ist zusätzlich zur Spannungserfassungsschaltung eine Austasteinrichtung in Form eines Austasttransistors 140 vorgesehen, welcher mit dem gleichen Signal wie der Schalter 31 des Tiefsetzstellers angesteuert wird.

In einer weiteren Ausführungsform kann vorgesehen sein, dass das erfindungsgemäßen Betriebsgerät für den Nutzer bezüglich der angeschlossenen Leuchtmittel und Energiespeicher für den Nutzer programmierbar ausgebildet ist. Darüber hinaus kann als Teil der Steuerung des Betriebsgerätes ein aktivierbares Software-Modul vorgesehen sein, mit welchem ein Energiespeicher-Management ausführbar ist, das die Ladung des Energiespeichers, insbesondere den Ladestrom, die Batteriespannung, die Ladeschlussspannung und den Erhaltungsladungsstrom steuert. Dabei kann das Modul in einer besonderen Ausführungsform mittels einer Konfigurationsschnittstelle aktiviert und/oder an die angeschlossenen Verbraucher angepasst werden.

**Bezugszeichenliste**

| | |
|---|---|
| 1 | Betriebsgerät mit programmierbarer Notlichtfunktion |
| 10 | Konvertereinrichtung |
| 20 | Zwischenkreis |
| 21 | Kondensator |
| 30, 30' | Ausgangsstufe |
| 31 | Schalter |
| 32 | Induktivität |
| 33 | Diode |
| 34 | Kondensator |
| 35 | Messwiderstand |
| 38A, B | Ausgangsanschluss |
| 40 | Ausgangsstufe |
| 41 | Schalter |

| | |
|---|---|
| 42 | Induktivität |
| 43 | Diode |
| 44 | Kondensator |
| 48A,B,C | Ausgangsanschluss |
| 50 | Steuereinrichtung |
| 60 | Schaltmittel, Relais |
| 70 | Spannungserfassungseinrichtung |
| 71 | pnp-Transistor |
| 72 | Emitterwiderstand |
| 73 | Kollektorwiderstand |
| 74 | Kondensator |
| 80 | Erweiterte Ausgangsstufe |
| 90 | Fühlereinrichtung |
| 95 | Busschnittstelle |
| 100 | LED-Reihenschaltung |
| 110 | Ventilator |
| 120 | Energiespeicher, Akkumulator |
| 140 | Austastschalter |
| 300 | Notlichtbetriebsgerät |
| 310 | Notlichtkonverter |
| 311 | Steuereinrichtung mit Ladestufe |
| 312 | LED-Treiberstufe |
| 313 | Relais |
| 314 | Notfalltreiberstufe |
| 320 | Energiespeicher, Akkumulator |
| 330 | LED-Reihenschaltung |
| A,B | Relaiskontakt |
| F1, F2 | Sensoranschlüsse |
| F3 | Messleitung |

S1        Schalter

**Patentansprüche**

1. Verfahren zum Versorgen zumindest eines Verbrauchers wie eines LED-Moduls (100) und eines Energiespeichers (120), bei dem ein durch einen Eingangskreis versorgter Zwischenkreis (20) zumindest zwei Ausgangsstufen (30, 30', 80) versorgt, wobei der Verbraucher an eine erste Ausgangsstufe (30, 30') und der Energiespeicher (120) an eine zweite Ausgangsstufe (80) angeschlossen wird,
   **dadurch gekennzeichnet, dass** die zweite Ausgangsstufe (80) in unterschiedliche Betriebszustände gebracht wird, wobei in einem Betriebszustand der zweiten Ausgangsstufe der Energiespeicher (120) aus dem Zwischenkreis (20) geladen und in einem anderen Betriebszustand der zweiten Ausgangsstufe der Zwischenkreis aus dem Energiespeicher versorgt wird.

2. Verfahren nach Anspruch 1, **dadurch gekennzeichnet, dass** der eine Betriebszustand der zweiten Ausgangsstufe (80) durch Einstellen einer ersten Schaltstellung eines Schaltmittels (60) der zweiten Ausgangsstufe eingestellt und der andere Betriebszustand der zweiten Ausgangsstufe (80) durch Einstellen einer zweiten Schaltstellung des Schaltmittels (60) der zweiten Ausgangsstufe eingestellt wird.

3. Verfahren nach einem der Ansprüche 1 oder 2,
   **dadurch gekennzeichnet, dass** durch die zweite Ausgangsstufe (80) in dem einen Betriebszustand die Funktion eines Tiefsetzstellers und in dem anderen Betriebszustand die Funktion eines Hochsetzstellers ausgeführt wird.

4. Verfahren nach Anspruch 3, **dadurch gekennzeichnet , dass** der Zwischenkreis (20) eine Kondensatoreinrichtung aufweist, die als Kapazität (21) des Hochsetzstellers geschaltet wird.

5. Verfahren nach einem der Ansprüche 2 bis 4,
   **dadurch gekennzeichnet, dass** das Schaltmittel (60) zumindest einen Umschalter umfasst, wobei in der zweiten Schaltstellung des Schaltmittels ein Kontakt des zumindest einen Umschalters mit dem Bezugspotential des Zwischenkreises (20) verbunden wird.

6. Verfahren nach einem der Ansprüche 2 bis 5,
   **dadurch gekennzeichnet, dass** erste und zweite Ausgangsstufe (30, 30', 80) von einer in einem Betriebsgerät angeordneten Steuereinrichtung (50) gesteuert werden, wobei das Schaltmittel (50) durch eine am Eingangskreis anliegende Eingangsspannung (L(D), N) gesteuert wird.

7. Verfahren nach einem der Ansprüche 2 bis 5,
   **dadurch gekennzeichnet, dass** das Schaltmittel (60) von einer Steuereinrichtung gesteuert wird, von welcher über einen Datenbus Steuerinformation an das Schaltmittel übertragen wird.

8. Verfahren nach einem der Ansprüche 1 bis 7,
   **dadurch gekennzeichnet, dass** die Spannung am Verbraucher oder des Energiespeichers erfasst wird, indem ein einzelner Transistor (71) angeordnet wird, der über einen Widerstand (72) mit einem ersten Ausgangsanschluss (38A) der Ausgangsstufe (30') und dessen Steuereingang mit einem zweiten Ausgangsanschluss (38A) der Ausgangsstufe (30') des Verbrauchers (100) verbunden wird.

9. Verfahren nach Anspruch 8, **dadurch gekennzeichnet , dass** in einem Speicher eine Kennlinie des Transistors (71) hinterlegt wird, welche eine Flussspannung ($U\_BE$) in Abhängigkeit eines Transistorstromes angibt, wobei die Spannung ($V\_LED$) am Verbraucher (100) bzw. des Energiespeichers (100) unter Berücksichtigung einer abgegriffenen Messspannung ($V'\_LED$) und der abgelegten Kennlinie berechnet wird.

10. Verfahren nach einem der Ansprüche 8 oder 9,
    **dadurch gekennzeichnet, dass** eine Temperatur des Transistors (71) gemessen wird, wobei in einem Speicher eine Temperaturkennlinie des Transistors hinterlegt wird, welche eine Flussspannung ($U\_BE$) in Abhängigkeit der Temperatur angibt, und wobei die Spannung am Verbraucher (100) bzw. des Energiespeichers (120) unter Berücksichtigung der abgegriffenen Messspannung ($V'\_LED$) und der abgelegten Kennlinie berechnet wird.

11. Betriebsgerät (1) zum Versorgen eines Verbrauchers wie eines LED-Moduls, umfassend eine Konvertereinrichtung (10) zum Anschluss an ein Versorgungsnetz, insbesondere eine an ein Wechselstromnetz anschließbare Gleichtrichtereinrichtung, mit einem Ausgang zum Versorgen eines Zwischenkreises (20), an welchen zumindest zwei Ausgangsstufen (30, 30', 40) angeschlossen sind, wobei eine erste Ausgangsstufe (30, 30') den Verbraucher (100) speist und eine zweite Ausgangsstufe (40) zum Laden eines Energiespeichers (120) eingerichtet ist, und zumindest eine der beiden Ausgangsstufen einen von einer Steuereinrichtung (50) gesteuerten Schalter (31, 41) aufweist, **dadurch gekennzeichnet, dass** die zweite Ausgangsstufe mittels eines Schaltmittels (60) in unterschiedliche Betriebszustände bringbar ist, wobei in einem Betriebszustand der zweiten Ausgangsstufe (40) der Energiespeicher (120) aus dem Zwischenkreis (20) ladbar und in einem anderen Betriebszustand der zweiten Ausgangsstufe der Zwischenkreis (20) aus dem Energiespeicher (120) versorgbar ist.

12. Betriebsgerät nach Anspruch 11, **dadurch gekennzeichnet, dass** der Eingangskreis zum Versorgen des Zwischenkreises (20), die erste und zweite Ausgangsstufe (30, 30', 40) sowie das Schaltmittel (60) in dem Gehäuse des Betriebsgerätes angeordnet sind.

13. Betriebsgerät nach Anspruch 11 oder 12, **dadurch gekennzeichnet, dass** die zweite Ausgangstufe (40) einen Schaltkreis zumindest aufweisend einen steuerbaren Schalter (41), eine Drossel (42), eine Diode (43) sowie das Schaltmittel (60) umfasst.

14. Betriebsgerät nach einem der Ansprüche 11 bis 13, **dadurch gekennzeichnet, dass** das Betriebsgerät einen Ausgangsanschluss (48C) aufweist, welcher auf dem Bezugspotential des Zwischenkreises (20) liegt.

15. Betriebsgerät nach einem der Ansprüche 11 bis 14, **dadurch gekennzeichnet, dass** das Schaltmittel zwei Wechslern umfasst.

16. Betriebsgerät nach einem der Ansprüche 11 bis 15, **dadurch gekennzeichnet, dass** eine Spannungserfassungsschaltung (70) zur Erfassung der Spannung am Verbraucher (100) bzw. des Energiespeichers (120) angeordnet ist umfassend einen einzelnen Transistor (71), der über einen Widerstand (72) mit einem ersten Ausgangsanschluss (38A) der Ausgangsstufe und dessen Steuereingang mit einem zweiten Ausgangsanschluss (38B) der Ausgangsstufe (30') des Verbrauchers (100) verbunden ist.

17. Betriebsgerät nach Anspruch 16, **dadurch gekennzeichnet , dass** ein weiterer Anschluss des Transistors über einen Messwiderstand (73) mit einem Bezugspotential verbunden ist, und über den Messwiderstand (73) eine Messspannung (V'_LED) abgreifbar ist und die Steuereinrichtung (50) aus der abgegriffenen Messspannung (V'_LED) die Spannung (V_LED) am Verbraucher (100) oder des Energiespeichers (120) ermittelt.

18. Betriebsgerät nach einem der Ansprüche 16 bis 17, **dadurch gekennzeichnet, dass** der Transistor (71) ein bipolarer Transistor, insbesondere ein pnp-Transistor ist.

19. Betriebsgerät nach einem der Ansprüche 11 bis 18, **gekennzeichnet durch** eine Austasteinrichtung zum Austasten der Messspannung (V'_LED) im Ansprechen auf die Schalterstellung des Schalters (31) einer Ausgangstufe (30').

20. Betriebsgerät nach einem der Ansprüche 11 bis 19, **dadurch gekennzeichnet, dass** die Austasteinrichtung einen Transistor (140) umfasst, dessen Steuereingang mit dem Steuereingang des Schalters (31) einer Ausgangsstufe (30') verbunden ist.

21. Betriebsgerät nach einem der Ansprüche 11 bis 20, **dadurch gekennzeichnet, dass** das Betriebgerät (1) als Notlichtbetriebsgerät eingerichtet ist zum Betreiben des Verbrauchers (100) nach dem Erkennen des Ausfalls des Eingangsnetzes, insbesondere eines Wechselstromnetzes.

22. Betriebssystem, umfassend ein Betriebsgerät (1) nach einem der Ansprüche 11 bis 21 mit einem an die zweite Ausgangstufe (40) angeschlossenem externen Schaltmittel (60), dass eingangsseitig mit dem Bezugspotential des Zwischenkreises (20) verbindbar ist.

**Fig. 1**

**Fig. 2**

320 311 314 300 310 313 330

Stand der Technik

312

**Fig. 3**